# EUROPEAN PATENT APPLICATION

(11) **EP 4 254 118 A1**
(43) Date of publication of application: **04.10.2023**
(21) Application number: 21897964.9
(22) Date of filing: 24.11.2021
(51) Int. Cl.: G05D 1/02

(54) **MOBILE BODY SYSTEM, PICKING SYSTEM, AND ROUTE DETERMINATION METHOD**

(30) Priority: 27.11.2020 JP 2020196865
(71) Applicant: Murata Machinery, Ltd., Kyoto-shi, Kyoto 601-8326 (JP)
(72) Inventor: GOTO, Ayumu, Inuyama-shi, Aichi 484-8502 (JP)
(74) Representative: Hoffmann Eitle
(86) International application number: PCT/JP2021/042955
(87) International publication number: WO 2022/113992

(57) **Abstract**

A mobile body system (100) including: a mobile body (110); and a time route calculation system (120) that calculates a time route from a starting position to a target position of the mobile body (110). The time route includes points on a route and times when the mobile body (110) is present at the points. The time route calculation system includes: a node information set obtainer (121) that obtains a node information set of a plurality of node information items each of which includes point information and time information, where the point information indicates, in an identifiable manner, a plurality of points arranged in a virtual area for a corresponding one of times at predetermined intervals, and the time information indicates the corresponding one of the times; a search space creator (122) that obtains link information linking two of the plurality of node information items, to create a search space; a search space updater (123) that changes the link information to an impossible value to update the search space, where the link information determines, based on the time route of a given mobile body, that the given mobile body will come in contact with the mobile body, and the impossible value indicates that moving is impossible; and a route determiner (124) that determines the time route of the next mobile body based on the updated search space.

## Description

### [Technical Field]

The present invention relates to mobile body systems, picking systems, and route determination methods for determining routes along which a plurality of mobile bodies move.

### [Background Art]

Conventionally, in a mobile body system including a plurality of mobile bodies that move in a predetermined area, there is a case where routes of the mobile bodies intersect or partially overlap. In this case, a problem is that if two or more mobile bodies simultaneously enter a location with the risk of interference or overlap, a contact or a collision, for instance, occurs. PTL 1 describes techniques of avoiding contacts or collisions by eliminating interferences and overlaps from routes of a plurality of mobile bodies.

### [Citation List]

### [Patent Literature]

[PTL 1] Japanese Unexamined Patent Application Publication No. H10-312217

### [Summary of Invention]

### [Technical Problem]

In a conventional mobile body system, however, after each of routes of a plurality of mobile bodies is determined, presence or absence of interference is determined based on the moving time of each of the mobile bodies and one of two routes is changed. In this case, it takes a long time to determine routes for all of the mobile bodies if the number of mobile bodies increases.

### [Solution to Problem]

The present invention is conceived in view of the above problem, and has an object to provide a mobile body system, a picking system, and a route determination method capable of efficiently determining routes along which a plurality of mobile bodies move in a predetermined moving area.

### [Solution to Problem]

In order to achieve the above object, a mobile body system according to one aspect of the present invention includes: a mobile body that moves in a predetermined moving area; and a time route calculation system that calculates a time route from a starting position to a target position of the mobile body in the predetermined moving area, where the time route includes points on a route along which the mobile body moves and times when the mobile body is present at the points. The time route calculation system includes: a node information set obtainer that obtains a node information set of a plurality of node information items each of which includes point information and time information, where the point information indicates, in an identifiable manner, a plurality of points arranged in a virtual area including the predetermined moving area for a corresponding one of times at predetermined intervals, and the time information indicates the corresponding one of the times; a search space creator that obtains link information linking two of the plurality of node information items included in the node information set, to create a search space; a search space updater that changes the link information to an impossible value to update the search space, where the link information determines, based on a time route of a given mobile body, that the given mobile body will come in contact with the mobile body, and the impossible value indicates that moving is impossible; and a route determiner that determines a time route of the next mobile body based on the search space updated.

In order to achieve the above object, a route determination method according to one aspect of the present invention is a route determination method for a mobile body system including: a mobile body that moves in a predetermined moving area; and a time route calculation system that calculates a time route including (i) points on a route from a starting position to a target position of the mobile body in the predetermined moving area, and (ii) times when the mobile body is present at the points. The route determination method includes: obtaining, by a node information set obtainer, a node information set of a plurality of node information items each of which includes point information and time information, where the point information indicates, in an identifiable manner, a plurality of points arranged in a virtual area including the predetermined moving area for a corresponding one of times at predetermined intervals, and time information indicates the corresponding one of the times; obtaining, by a search space creator, link information linking two of the plurality of node information items included in the node information set, to create a search space; changing, by a search space updater, the link information to an impossible value to update the search space, where the link information determines, based on a time route of a given mobile body, that the given mobile body will come in contact with the mobile body, and the impossible value indicates that moving is impossible; and determining, by a route determiner, a time route of the next mobile body based on the search space updated.

### [Advantageous Effects of Invention]

According to the present invention, it is possible to efficiently search for and determine routes along which a plurality of mobile bodies can move without any interference in a predetermined moving area.

### [Brief Description of Drawings]

[FIG. 1]

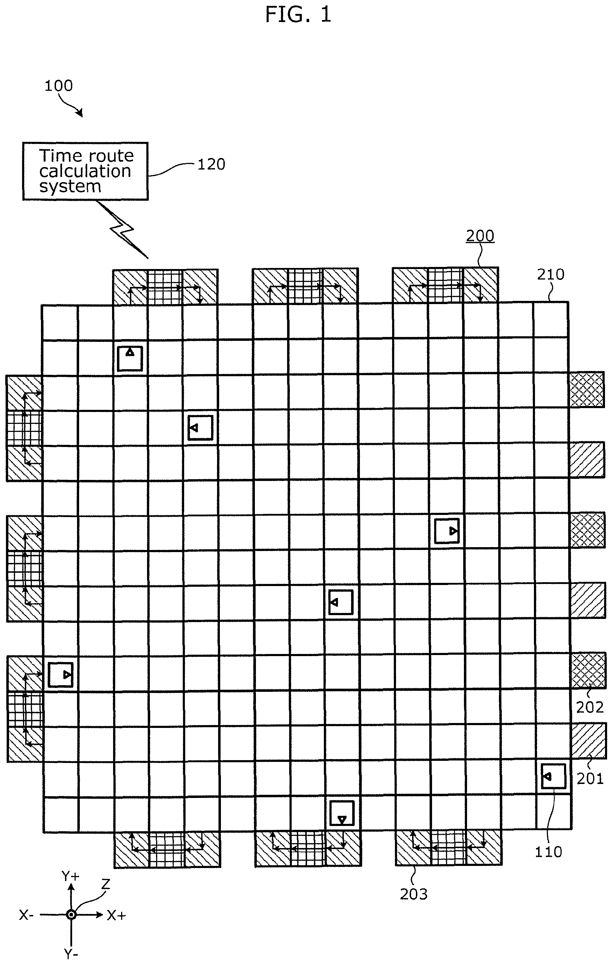

   FIG. 1 is a diagram illustrating a picking system to which a mobile body system is applied.
[FIG. 2]

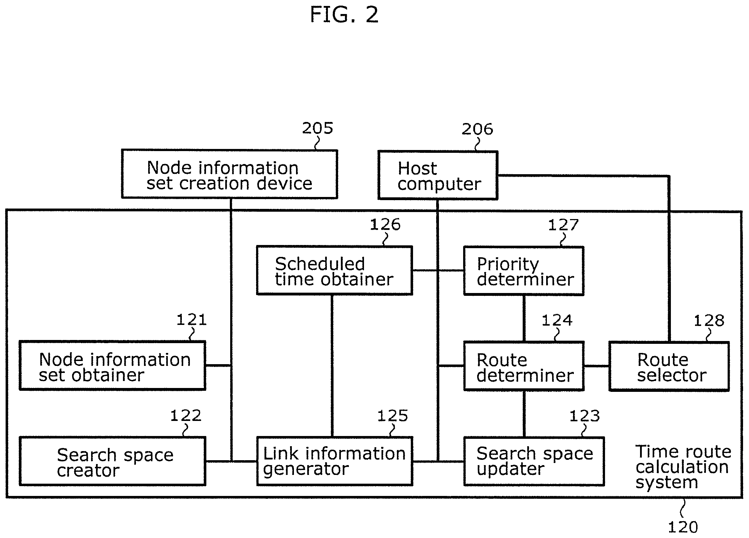

   FIG. 2 is a block diagram illustrating the functional parts of a time route calculation system.
[FIG. 3]

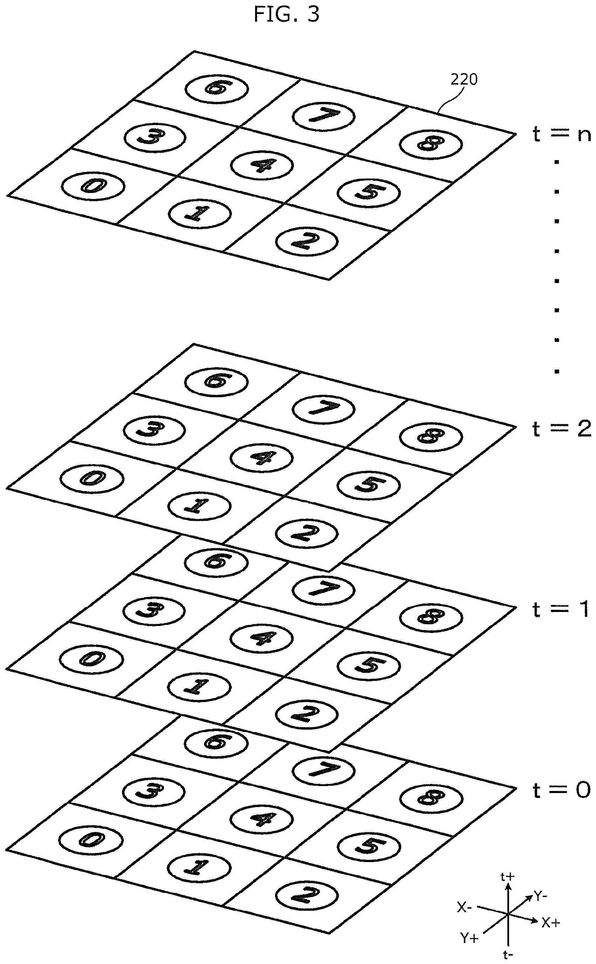

   FIG. 3 is a diagram illustrating node information items through abstraction.
[FIG. 4]

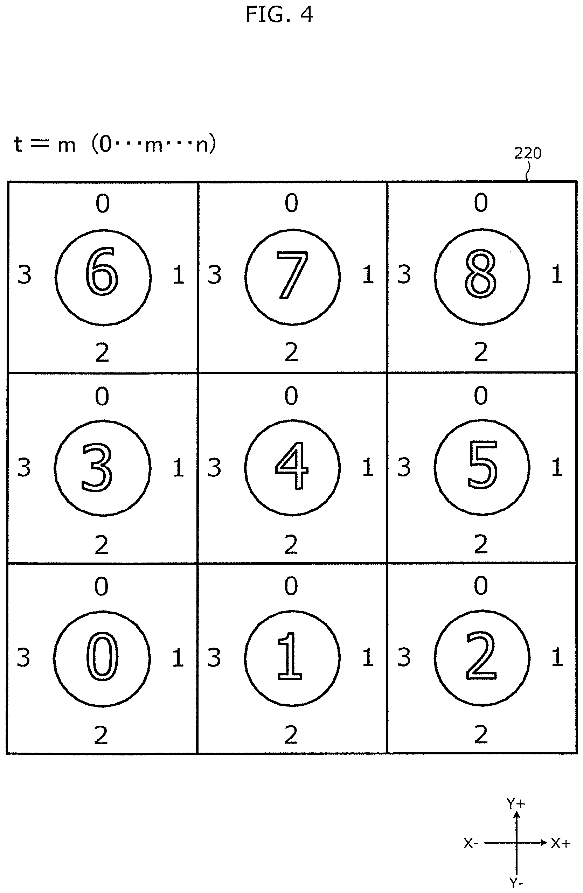

   FIG. 4 is a diagram illustrating in detail a node information item at a given time.
[FIG. 5]

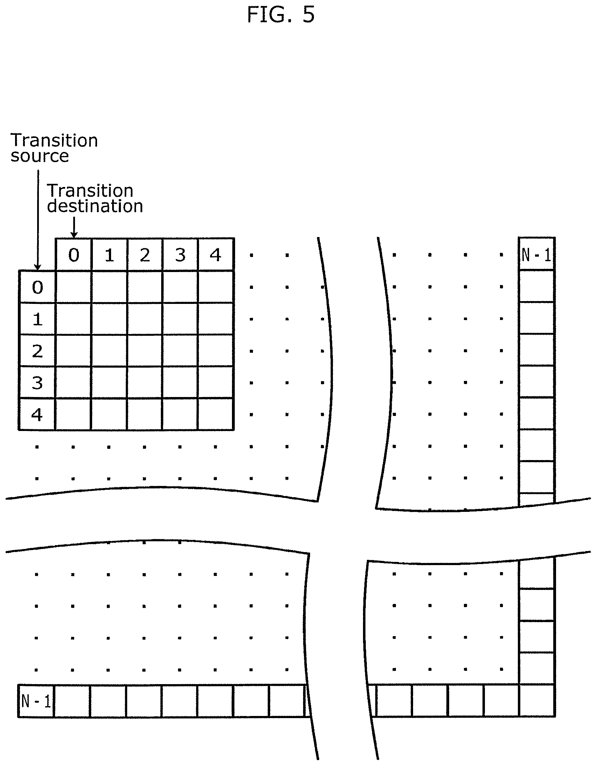

   FIG. 5 is a diagram illustrating a search space, which is in a two-dimensional array, in a matrix.
[FIG. 6]

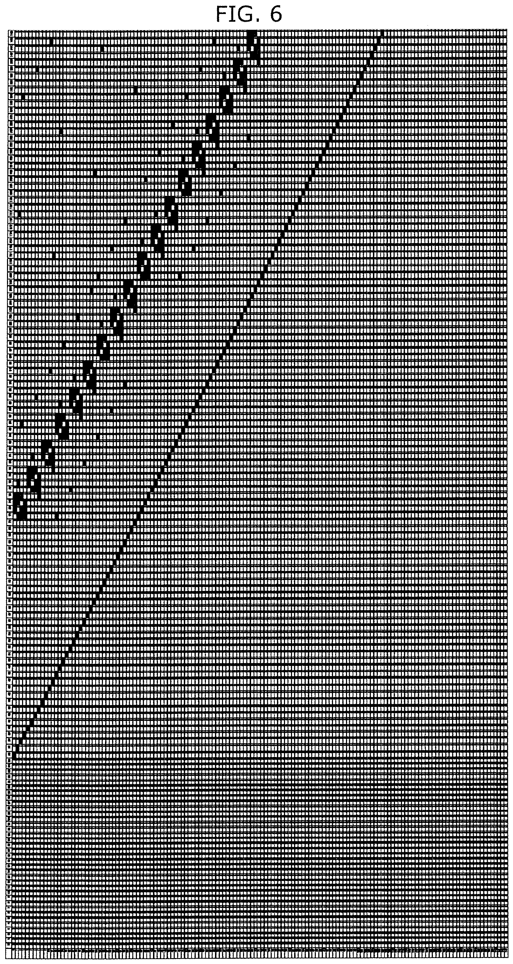

   FIG. 6 is a diagram schematically illustrating the whole of a search space.
[FIG. 7]

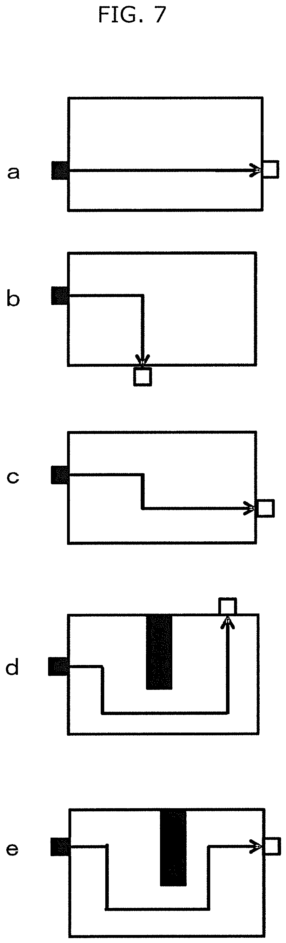

   FIG. 7 is a diagram illustrating patterns of the number of spin turns.
[FIG. 8]

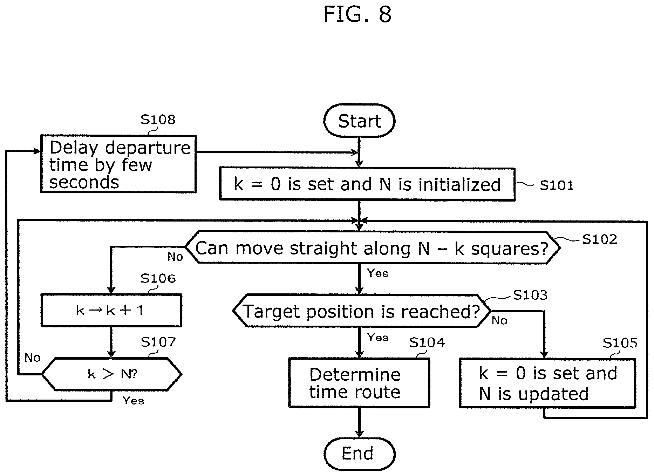

   FIG. 8 is a flowchart for determining a time route in the case where the number of spin turns is zero.
[FIG. 9]

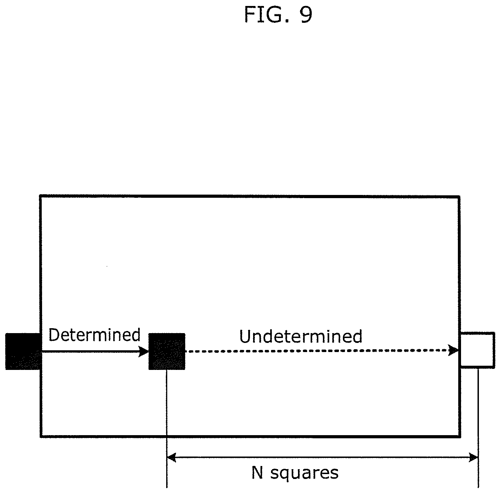

   FIG. 9 is a diagram illustrating a process in the middle of processes indicated in the flowchart in FIG. 8.
[FIG. 10]

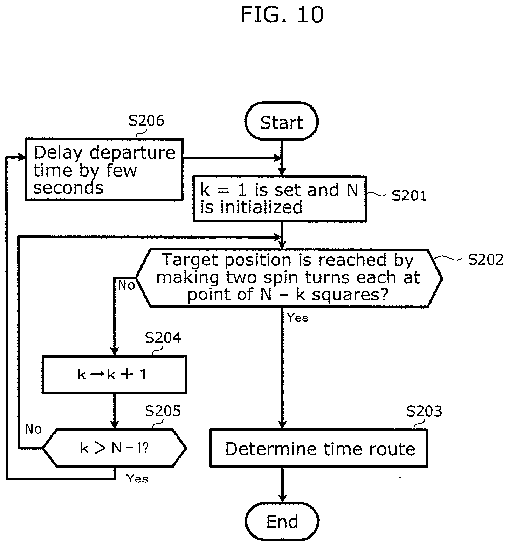

   FIG. 10 is a flowchart for determining a time route in the case where the number of spin turns is two.
[FIG. 11]

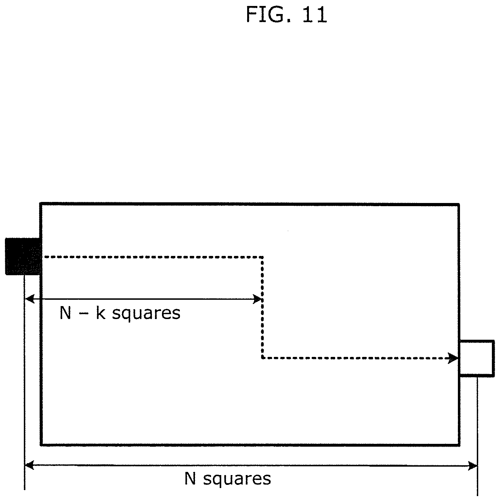

   FIG. 11 is a diagram illustrating a process in the middle of processes in the flowchart in FIG. 10.
[FIG. 12]

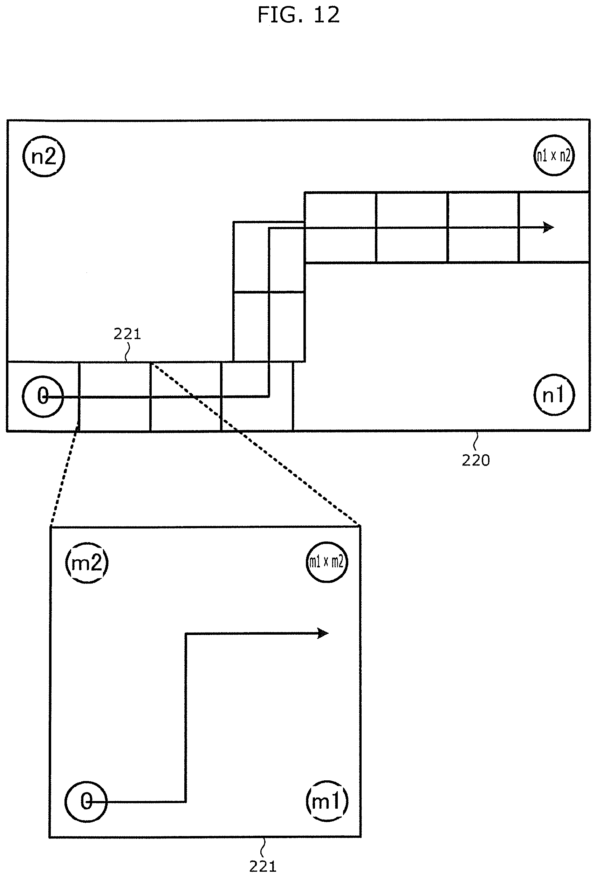

   FIG. 12 is a diagram illustrating a contrast between a virtual area and a small area.
[FIG. 13]

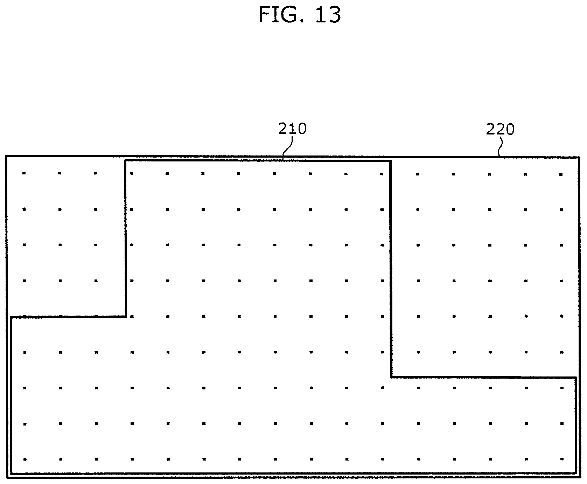

   FIG. 13 is a diagram illustrating the relationship between a moving area and a virtual area.

### [Description of Embodiments]

Hereinafter, a mobile body system, a picking system, and a route determination method according to the present invention will be described with reference to the drawings. An embodiment described below is one example for explaining the present invention and is not intended to limit the present invention. For example, shapes, structures, materials, elements, relative positional relationships, connection statuses, numerical values, mathematical expressions, a process in each of steps in a method, an order of the steps, etc. indicated in the embodiment below are mere examples and may include those not recited in the following description. Although geometric expressions such as "parallel" and "orthogonal" may be used, these expressions each do not express mathematical strictness and may include, for instance, a difference or deviation that is substantially allowed. Moreover, an expression such as "simultaneous" or "same" also includes a range that is substantially allowed.

The drawings are schematic diagrams in each of which emphasis, omission, or ratio adjustment is made where necessary for explaining the present invention, so that shapes, positional relationships, and ratios of elements are different from the actual shapes, positional relationships, and ratios of the elements.

The following may generally describe plural aspects of the present invention as one embodiment. Part of the description below is provided as the description of optional elements related to the present invention.

FIG. 1 is a diagram illustrating picking system 200 to which mobile body system 100 is applied. As illustrated in FIG. 1, picking system 200 includes a plurality of carrying-out stations 201, a plurality of carrying-in stations 202, a plurality of picking stations 203, and mobile body system 100. Mobile body system 100 includes mobile bodies 110 and time route calculation system 120.

Mobile body 110 is a device that moves in moving area 210 that is predetermined, and moves from a starting position to a target position based on a time route obtained from time route calculation system 120. The type of mobile body 110 is not specifically limited, and can be exemplified by the following: an autonomous mobile trackless vehicle that autonomously and freely moves on a floor surface based on a time route while recognizing its own position; a tracked vehicle that moves along a net-like track based on a time route and can change its direction at an intersection; a mobile body equipped with a lifting function that moves in a three-dimensional space as a moving area; and a drone that can freely move in a three-dimensional space. Mobile body 110 may be a transport vehicle or transport drone that transports, for instance, a person or a load. Devices such as a transfer device that transfers a load and a sensor that obtains information may be mounted on mobile body 110.

In the present embodiment, mobile body 110 is a transport vehicle that moves while holding a load and is capable of making a so-called spin turn of changing its direction on site without changing its position in moving area 210.

Moving area 210 is an area in which mobile body 110 can move. The shape of moving area 210 is not specifically limited. In the present embodiment, moving area 210 is a quadrilateral area, on a floor surface, surrounded by carrying-out stations 201, carrying-in stations 202, and picking stations 203. Each of squares sectioned by vertical lines and horizontal lines illustrated in FIG. 1 is a virtual area that is small to an extent that two mobile bodies 110 cannot be present at the same time. Each of the squares is associated with a different one of points for indicating a route along which mobile body 110 moves (the details will be described later). The vertical lines and the horizontal lines in moving area 210 illustrated in FIG. 1 are virtual lines and are not marked on an actual floor surface on which mobile body 110 moves.

Carrying-out station 201 is a facility which stores loads to be carried out from, for instance, an automated storage and transferred to mobile bodies 110, and in which a load is transferred to mobile body 110 that arrives. The functions, structure, and shape of carrying-out station 201 are not specifically limited. For example, carrying-out station 201 is connected to the automated storage via a conveyor, and the loads are sequentially transported from the automated storage based on orders. Carrying-out station 201 may include a transfer device that transfers a load to mobile body 110 or may not include a transfer device in the case where mobile body 110 includes a transfer device.

Carrying-in station 202 is a facility in which a load is received from mobile body 110 that arrives and the load is transported to, for instance, an automated storage. The functions, structure, and shape of carrying-in station 202 are not specifically limited. For example, carrying-in station 202 is connected to the automated storage via a conveyor, as is the case of carrying-out station 201, and loads are sequentially transported to the automated storage. Carrying-in station 202 may include a transfer device that transfers a load from mobile body 110 or may not include a transfer device in the case where mobile body 110 includes a transfer device.

Picking station 203 is a facility in which a worker who picks up or a picking robot takes out a predetermined number of articles from a load transported by mobile body 110 and puts the articles into another container, and the load from which the articles are taken out is transferred to mobile body 110.

FIG. 2 is a block diagram illustrating the functional parts of time route calculation system 120. As illustrated in FIG. 2, time route calculation system 120 is a system that calculates a time route including: points on a route from a starting position to a target position of mobile body 110 in moving area 210; and times when mobile body 110 is present at the points. Time route calculation system 120 includes the following as processing units implemented by a processor executing a program: node information set obtainer 121; search space creator 122; search space updater 123; and route determiner 124. In the present embodiment, time route calculation system 120 includes link information generator 125, scheduled time obtainer 126, priority determiner 127, and route selector 128.

Node information set obtainer 121 obtains a node information set of a plurality of node information items. FIG. 3 is a diagram illustrating node information items through abstraction. A node information item includes: point information (e.g., numerical values indicated in FIG. 3) indicating, in an identifiable manner, a plurality of points (circles in FIG. 3) arranged in virtual area 220 including moving area 210; and time information indicating a corresponding one of times t at predetermined intervals (e.g., from t = 0 to t = n, where n is a natural number including 0). In FIG. 3, the plurality of points are equally arranged in a matrix in a plane, but the two-dimensional arrangement of the points is not specifically limited and any arrangement can be selected. The points may be, for example, equally arranged in a circumferential direction or randomly arranged. The intervals between times t may or may not be equal. The point information for identifying each of the points may be sequential numbers (numerical values) as illustrated in FIG. 3 or random and mutually different numerical values.

FIG. 4 is a diagram illustrating in detail a node information item at a given time. In the present embodiment, a node information item includes also orientation information indicating the orientation of mobile body 110 at each of the points. In FIG. 4, numerical values marked around point information each indicate the orientation (direction) of mobile body 110. The number "0" indicates the Y-axis positive direction, the number "1" indicates the X-axis positive direction, the number "2" indicates the Y-axis negative direction, and the number "3" indicates the X-axis negative direction.

A node information item includes point information, time information, and orientation information. The format of the node information item is not limited to a specific format as long as each of node information items is identifiable. For example, node information item n corresponding to mobile body 110 located on point 5 with the orientation of the X-axis positive direction at time t = 3 can be expressed by n = (5, 3, 1) (point information, time information, orientation information). In the present embodiment, point information is denoted by p (from 0 to 8 in the examples illustrated in FIG. 3 and FIG. 4), the total number of points is denoted by P, time information is denoted by t, orientation information is denoted by d, the number of orientations is denoted by D, node information n is expressed by n = t × P × D + p × D + d, and node information items are set as sequential numbers with rules. Accordingly, a remainder resulting from dividing node information n by the number of orientations D is orientation information d. A remainder resulting from dividing the quotient (t × P + p) of the previous division by the total number of points P is point information and the quotient thereof is time information. By thus setting sequential numbers with rules for node information items, it is possible to easily obtain point information, time information, and orientation information from a node information item through simple calculations (with less number of processes).

A node information set includes at least a node information item that can identify a combination of point information in virtual area 220 and corresponding time information in a predetermined time period. In the present embodiment, a node information set includes a node information item that can identify a combination of point information, time information, and orientation information.

In the present embodiment, node information set obtainer 121 obtains a node information set from node information set creation device 205, but time route calculation system 120 may include node information set creation device 205 as a device or a processing unit.

Search space creator 122 obtains link information linking two node information items included in a node information set obtained by node information set obtainer 121, to create a search space. In the present embodiment, search space creator 122 obtains link information from link information generator 125 that generates link information. A search space created by search space creator 122 is stored in a storage device (not shown) included in time route calculation system 120. Link information will be described later.

In the present embodiment, search space creator 122 uses a two-dimensional array indexed by (i) sequential numbers with rules which are information that can identify each of node information items included in a node information set and are defined as source indices corresponding to transition sources, and (ii) the same sequential numbers which are defined as destination indices corresponding to transition destinations, and obtains, as link information, the element value of each of array variables in the two-dimensional array to create a search space. FIG. 5 is a diagram illustrating a search space, which is a two-dimensional array, in a matrix. Natural numbers longitudinally arranged as transition sources are source indices, and natural numbers transversely arranged as transition destinations are destination indices. Each of element values determined using the source indices and the destination indices is link information.

Link information generator 125 generates link information which is a weight used in the case of selecting part of a time route along which mobile body 110 moves from the node information item of a transition source to the node information item of a transition destination. The description is provided assuming that a stop state is also included in the concept of moving.

FIG. 6 is a diagram schematically illustrating the whole of a search space. The black parts in FIG. 6 each include link information other than an impossible value. In the present embodiment, since a node information item includes orientation information, link information generator 125 generates also link information that is a weight used in the case of selecting the direction of mobile body 110. Values appropriate for a time route calculation method executed by route determiner 124 are used for such a weight.

When time information included in the node information item of a transition destination indicates a time before the time indicated by the node information item of a transition source, since time cannot be reversed, link information generator 125 generates, as link information, an impossible value indicating that moving of mobile body 110 is not possible. Accordingly, in the present embodiment, a matrix indicating a search space forms an upper triangular matrix (or a lower triangular matrix), as illustrated in FIG. 6.

When mobile body 110 cannot move from the node information item of a transition source to the node information item of a transition destination with the speed of mobile body 110 (acceleration may be taken into consideration), as calculated based on the node information item of a transition source and the node information item of a transition destination, link information generator 125 generates an impossible value as link information. In this way, a search space is formed by array variables whose number is the square of the number of node information items, but most of element values of the array variables are impossible values and a sparse matrix as illustrated in FIG. 6 is formed.

A specific example of link information generation that takes the speed of mobile body 110 into consideration is a case where the interval between times t is equally three seconds and it takes nine seconds for mobile body 110 to move straight along three squares (e.g., from square 0 to square 6 in FIG. 3), link information generator 125 generates a weight as link information for any two node information items whose difference in point information between a transition source and a transition destination is two squares and whose difference in time information is three (= a unit interval resulting from nine seconds / three seconds ). The interval between times, the moving time of mobile body 110, and the time of spin turns may not be the multiple of the interval between times. In this case, link information generator 125 handles the case by rounding the moving time. Specifically, when mobile body 110 moves straight, for example, it is assumed that a time required for mobile body 110 to move a square is 7.0 seconds, two squares is 8.5 seconds, and three squares is 9.7 seconds. Although it takes 8.5 seconds for mobile body 110 to move two squares, since the interval between times is defined as 3 seconds, link information generator 125 generates link information by rounding the moving time to the nearer between 6 seconds (a time equivalent to two squares) and 9 seconds (a time equivalent to three squares), i.e., 9 seconds.

Examples of an impossible value are not specifically limited, and 0 may be exemplified as an impossible value, for example. An impossible value may be, for instance, null in a programming language or may be a weight that is set so that the weight will not be selected in reality. Plural values may be set for impossible values. For example, different values may be set for an impossible value indicating that moving is impossible and an impossible value in the case of cutting a link for avoiding contacts between mobile bodies.

In a short time mode that allows mobile body 110 to arrive at a target position as early as possible, link information generator 125 sets a lighter weight, than the weight of other link information, for link information that links node information items each including point information indicating a target position.

In a scheduled time mode in which mobile body 110 arrives at a target position at a scheduled time, link information generator 125 sets the weight of link information linking node information items each including point information indicating a target position as follows: link information generator 125 sets (i) a heavy weight for link information by which a node information item that includes point information indicating a target position and time information indicating a time before a scheduled arrival time is linked as one of the node information items linked by the link information, and (ii) a light weight for link information by which a node information item that includes point information indicating a target position and time information indicating a time after a scheduled arrival time is linked as one of the node information items linked by the link information. In the case where a stand-by position is preset, link information generator 125 may set the weight of link information linking node information items each including point information indicating the stand-by position to be (i) heavier than the weight of link information by which a node information item that includes time information indicating a time after a scheduled arrival time is linked as one of node information items linked by the link information, and (ii) lighter than the weight of link information by which a node information item that includes point information indicating a target position and time information indicating a time before a scheduled arrival time is linked as one of node information items linked by the link information.

For example, scheduled time obtainer 126 obtains a moving instruction from, for instance, host computer 206 that outputs a moving instruction to mobile body 110, and obtains a scheduled time included in the moving instruction.

Search space updater 123 changes link information that determines, based on the time route of given mobile body 110, that given mobile body 110 will come in contact with mobile body 110 to an impossible value indicating that moving is impossible, to update a search space. Specifically, a time route determined by route determiner 124 to be described later includes: point information items indicating points on a route from a starting position to a target position of mobile body 110; and times when mobile body 110 is present at the points corresponding to the point information items. Since a time route corresponds to node information items of a search space, search space updater 123 changes, to an impossible value, at least link information by which any one of the node information items corresponding to the time route is linked as a transition destination, to update the search space. Search space updater 123 may change, to an impossible value, link information by which any one of the node information items corresponding to the time route is linked as one of node information items linked by the link information, to update the search space.

Route determiner 124 determines the time route of the next mobile body 110 based on a search space updated by search space updater 123. A method of determining a time route employed by route determiner 124 is not specifically limited, and route determiner 124 may apply, for instance, a general optimization method such as a slime mold algorithm or Dijkstra's algorithm to a search space to determine a time route. Although a search space is an extensive space including link information items whose number is the square of the number of node information items, most of array variables in the search space are impossible values and a sparse matrix is formed. Accordingly, even in a situation where moving instructions are output one by one to each of mobile bodies 110, matrix calculation such as a slime mold algorithm can be executed within a predetermined time.

Route determiner 124 may determine, based on an updated search space, a time route in which the number of brief stops for changing a moving direction is smallest. Accordingly, the degree of flexibility for possible time routes (the number of search candidates) is reduced, and this enables generating a time route at a higher speed than the case of using a general optimization method. In the present embodiment, the number of brief stops for changing a moving direction is the number of spin turns, and route determiner 124 calculates the smallest number of spin turns based on the positional relationship between a starting position and a target position, and the status of impossible values between the starting position and the target position in the search space. FIG. 7 is a diagram illustrating patterns of the number of spin turns. In FIG. 7, each of black squares represents a starting position, each of white squares represents a target position, and a black part in a moving area represents an obstacle. (a) in FIG. 7 shows the case where the number of spin turns is 0. (b) in FIG. 7 shows the case where the number of spin turns is 1. (c) in FIG. 7 shows the case where the number of spin turns is 2. (d) in FIG. 7 shows the case where the number of spin turns is 3. (e) in FIG. 7 shows the case where the number of spin turns is 4. Besides these cases, there is a case where the number of spin turns increases such as a case where obstacles are at multiple locations. When it is not possible to generate a time route for a mobile body under a restricted condition that a time route with the smallest number of spin turns is the only option due to the low degree of flexibility for possible time routes although there is enough time for deciding a time route, the restricted condition may be loosened and a time route with the "second" smallest number of spin turns resulting from increasing the number of spin turns from the smallest number of spin turns by a few turns (i.e. a time route with the increased degree of flexibility) may be again searched for instead of selecting an option of delaying the departure time of the mobile body by a few seconds to search for a time route again under the same restricted condition.

FIG. 8 is a flowchart for determining a time route for mobile body 110 in the case where the number of spin turns is zero. FIG. 9 is a diagram illustrating a process in the middle of processes indicated in the flowchart. First, k = 0 is set (k denotes a value indicated by a counter) and N is initialized (S101). Subsequently, whether mobile body 110 can move straight along N - k squares from a starting position is checked using a search space (S102). If link information by which any one of point information items indicating points aligned from the starting position is linked as one of node information items linked by the link information includes no impossible value, for example, mobile body 110 can move straight. When mobile body 110 can move straight (Yes in S102), whether a target position is reached is determined (S103). If the target position is reached (Yes in S103), a route along which mobile body 110 can move straight is determined as a time route for mobile body 110 (S104). When the target position is not reached (No in S103), k = 0 is set, N is updated (S105), and whether mobile body 110 can move straight is determined again (S102). When mobile body 110 cannot move straight along N - k squares (No in S102), k is incremented by 1 (S106), and when the incremented k is less than or equal to N (No in S107), whether mobile body 110 can move straight along N - k squares is checked again (S102). When the incremented k is greater than N (Yes in S107), the departure time of mobile body 110 is delayed by a few seconds (S108), k = 0 is set again, and N is initialized (S101). By repeating the above processes, route determiner 124 determines a time route for mobile body 110.

FIG. 10 is a flowchart for determining a time route for mobile body 110 in the case where the number of spin turns is two. FIG. 11 is a diagram illustrating a process in the middle of processes in the flowchart. First, k = 1 is set (k denotes a value indicated by a counter) and N is initialized (S201). Subsequently, whether a target position can be reached by making two 90-degree spin turns in different squares each at the point of N - k squares from a starting position is checked using a search space (S202). When the target position is reached (Yes in S202), a route in which two 90-degree spin turns are made each at the point of N - k squares is determined as a time route for mobile body 110 (S203). When the target position is not reached (No in S202), k is incremented by 1 (S204), and when the incremented k is less than or equal to N - 1 (No in S205), whether the target position can be reached by making two spin turns each at the point of N - k squares is checked again (S202). When the incremented k is greater than N (Yes in S205), the departure time of mobile body 110 is delayed by a few seconds (S206), k = 1 is set again, and N is initialized (S201). By repeating the above processes, route determiner 124 determines a time route for mobile body 110.

Priority determiner 127 determines priority in determining the time route of mobile body 110 based on moving instructions given to mobile bodies 110. As a general rule, route determiner 124 determines the time route of mobile body 110 based on the output order of moving instructions output from, for instance, host computer 206. In the case where priority determiner 127 determines the priority based on moving instructions output in a predetermined time period, for example, route determiner 124 determines the time route of mobile body 110 in the descending order of priority determined by priority determiner 127.

When route determiner 124 determines a plurality of time routes for mobile body 110 with low priority using a search space updated by search space updater 123 based on a time route determined for mobile body 110 with high priority and route selector 128 obtains, from host computer 206 for example, information that the actual movement of mobile body 110 with high priority deviates from the corresponding time route, route selector 128 may select, from among the plurality of time routes, a time route to be output to mobile body 110 with low priority.

The priority determination method employed by priority determiner 127 is not specifically limited, but in the case of obtaining, from host computer 206 for example, a moving instruction that sets a target position at which a load is transferred to and from mobile body 110 less frequently (e.g., any one of carrying-in stations 202), priority determiner 127 may give higher priority to the time route of mobile body 110 having obtained the moving instruction over the time route of other mobile body 110 provided with a moving instruction that sets a target position at which a load is transferred to and from mobile body 110 more frequently. Accordingly, it is possible to inhibit an increase in the idle time of a crane in an automated storage, which is caused by the delayed arrival of mobile body 110 at carrying-in station 202 at which a load arrives less frequently.

Priority determiner 127 may give higher priority, over mobile body 110 provided with a different moving instruction, to mobile body 110 provided with a moving instruction that sets, as a starting position, a transfer station such as carrying-out station 201 or carrying-in station 202 at which mobile body 110 arrives very frequently. Accordingly, it is possible to reduce the numbers of loads and mobile bodies 110 remaining at a transfer station, and thus enhance load transport efficiency. When a new moving instruction is generated, the next time route of mobile body 110 whose time route has already been determined may be searched for. If the new moving instruction is to be prioritized, the already determined time route may be canceled and mobile body 110 may move along a newly searched time route.

With mobile body system 100 according to the present embodiment, link information, of a search space, that indicates the risk of interference between mobile body 110 that moves along a prescribed time route and other mobile body 110 is changed to an impossible value based on the prescribed time route, to update the search space. With this, if a time route is calculated in the updated search space and the next mobile body 110 moves along the calculated time route, the next mobile body 110 will not interfere with mobile body 110 that moves along the prescribed time route. Accordingly, even in the case where a plurality of mobile bodies 110 move in the same moving area 210, it is possible to generate, in a relatively short time, time routes that avoid mutual interference among the plurality of mobile bodies 110.

Moreover, discretionarily changing link information items related to predetermined points enables generating a time route with which mobile body 110 arrives at a target position early, and also enables generating a time route with which mobile body 110 arrives at a target position at a scheduled time.

The present invention is not limited to embodiments described above. Another embodiment achieved by discretionarily combining elements described in the present specification or excluding some of the elements may be also considered as an embodiment of the present invention. Variations obtained by applying various modifications conceived by a person skilled in the art to the embodiments are also included in the present invention so long as they do not depart from the spirit of the present invention, i.e., meaning indicated by wording used in the scope of the claims.

For example: time route calculation system 120 may calculate a time route using a search space created by reducing the density of points in virtual area 220 illustrated in the upper part of FIG. 12; node information set obtainer 121 may obtain a small node information set of a plurality of small node information items each of which includes (i) small area point information indicating, in an identifiable manner, small area points that are arranged in small area 221 (illustrated in the lower part of FIG. 12) in virtual area 220 including part of a prescribed time route of given mobile body 110 and that have higher density than the points in virtual area 220 illustrated in the upper part of FIG. 12, and (ii) time information indicating a corresponding one of the times; search space creator 122 may obtain small link information linking two small node information items included in the small node information set, to create a small search space; search space updater 123 may change small link information that determines, based on the part of the prescribed time route of given mobile body 110, that given moving body 110 will come in contact with mobile body 110 to an impossible value indicating that moving is impossible, to update the small search space; and route determiner 124 may determine the time route of the next moving body 110 based on the updated small search space. Accordingly, since a time route is roughly calculated and then a precise time route along the roughly calculated time route is calculated, it is possible to reduce the number of node information items used for calculating a final time route, and this enables high-speed calculation of a time route even in the case where moving area 210 in which mobile bodies 110 move is spacious.

Even in the case where moving area 210 is not quadrilateral, as illustrated in FIG. 13, a quadrilateral area including moving area 210 may be set as virtual area 220. In this case, link information by which a node information item that includes point information indicating a point outside moving area 210 is linked as one of node information items linked by the link information may be changed to an impossible value. This enables easy generation of a time route even in the case where moving area 210 is of a complicated shape.

Although node information set creation device 205 is described as being separate from time route calculation system 120, the functions of node information set creation device 205 may be implemented as a node information set creator by time route calculation system 120.

Time route calculation system 120 may be implemented by a single device or a plurality of devices capable of transmitting and receiving information through communication.

In the case where mobile body 110 is a transport vehicle that transports, for instance, a load, and the moving speed and spin turn speed of mobile body 110 in a loaded state in which a load is held by mobile body 110 are different from the moving speed and spin turn speed of mobile body 110 in an unloaded state in which no load is held by mobile body 110, a search space for mobile body 110 in the loaded state and a search space for mobile body 110 in the unloaded state may be separately prepared and each of the search spaces may be selected based on, for instance, a moving instruction provided for mobile body 110.

A load may not be transferred from mobile body 110 at picking station 203. For example, mobile body 110 holding a load may stop at picking station 203, a picking operation may be performed while mobile body 110 holds the load, and after the picking operation is completed, mobile body 110 may move while holding the load.

According to the priority determination method employed by priority determiner 127, in the case of obtaining a moving instruction that sets a target position at which mobile body 110 arrives less frequently (e.g., any one of picking stations 203), higher priority may be given to the time route of mobile body 110 provided with the moving instruction over the time route of mobile body 110 provided with a moving instruction that sets a target position at which mobile body 110 arrives more frequently. Accordingly, it is possible to inhibit an increase in the idle time of a worker who picks up, which is caused by the delayed arrival of mobile body 110 at picking station 203 at which mobile body 110 arrives less frequently.

Priority determiner 127 may give higher priority, over mobile body 110 provided with a different moving instruction, to mobile body 110 provided with a moving instruction that sets, as a starting position, picking station 203 at which mobile body 110 arrives very frequently. Accordingly, it is possible to reduce the numbers of loads and mobile bodies 110 remaining at picking station 203, and thus enhance load transport efficiency.

### [Industrial Applicability]

The present invention can be applied to mobile body systems in which a plurality of mobile bodies having the risk of interference move.

### [Reference Signs List]

- 100: mobile body system
- 110: mobile body
- 120: time route calculation system
- 121: node information set obtainer
- 122: search space creator
- 123: search space updater
- 124: route determiner
- 125: link information generator
- 126: scheduled time obtainer
- 127: priority determiner
- 128: route selector
- 200: picking system
- 201: carrying-out station
- 202: carrying-in station
- 203: picking station
- 205: node information set creation device
- 206: host computer
- 210: moving area
- 220: virtual area
- 221: small area

## Claims

1. A mobile body system comprising:
a mobile body that moves in a predetermined moving area; and
a time route calculation system that calculates a time route from a starting position to a target position of the mobile body in the predetermined moving area, wherein
the time route includes points on a route along which the mobile body moves and times when the mobile body is present at the points,
the time route calculation system includes:
a node information set obtainer that obtains a node information set of a plurality of node information items each of which includes point information and time information, the point information indicating, in an identifiable manner, a plurality of points arranged in a virtual area including the predetermined moving area for a corresponding one of times at predetermined intervals, the time information indicating the corresponding one of the times;
a search space creator that obtains link information linking two of the plurality of node information items included in the node information set, to create a search space;
a search space updater that changes the link information to an impossible value to update the search space, the link information determining, based on a time route of a given mobile body, that the given mobile body will come in contact with the mobile body, the impossible value indicating that moving is impossible; and
a route determiner that determines a time route of a next mobile body based on the search space updated.

2. The mobile body system according to claim 1, wherein
the time route calculation system includes a link information generator that generates the link information, and
the link information generator sets a lighter weight, than a weight of other link information, for link information that links node information items each including point information indicating a target position.

3. The mobile body system according to claim 1, wherein
the time route calculation system includes:
a link information generator that generates the link information; and
a scheduled time obtainer that obtains a scheduled arrival time at a target position, and
the link information generator (i) sets a heavy weight for link information by which a node information item that includes point information indicating a target position and time information indicating a time before a scheduled arrival time is linked as one of the two of the plurality of node information items included in the node information set, and (ii) sets a light weight for link information by which a node information item that includes point information indicating a target position and time information indicating a time after a scheduled arrival time is linked as one of the two of the plurality of node information items included in the node information set.

4. The mobile body system according to any one of claims 1 to 3, wherein
the node information set obtainer obtains a small node information set of a plurality of small node information items each of which includes small area point information and time information, the small area point information item indicating, in an identifiable manner, small area points arranged in a small area including part of a prescribed time route of the given mobile body in the virtual area, the small area points having higher density than the plurality of points arranged in the virtual area, the time information indicating a corresponding one of the times,
the search space creator obtains small link information linking two of the plurality of small node information items included in the small node information set, to create a small search space,
the search space updater updates the small link information to an impossible value to update the small search space, the small link information determining, based on the part of the prescribed time route of the given mobile body, that the given mobile body will come in contact with the mobile body, the impossible value indicating that moving is impossible, and
the route determiner determines a time route of a next mobile body based on the small search space updated.

5. The mobile body system according to any one of claims 1 to 4, wherein
the time route calculation system includes:
a priority determiner that determines priority in determining the time route of the mobile body based on a moving instruction given to the mobile body, and
the route determiner determines the time route of the mobile body in a descending order of priority among moving instructions output in a predetermined time period.

6. The mobile body system according to claim 5, wherein
the route determiner determines a plurality of time routes for a mobile body with low priority, using the search space updated by the search space updater based on a time route determined for a mobile body with high priority, and
the time route calculation system includes:
a route selector that when an actual movement of the mobile body with high priority is deviated from a corresponding time route, selects, from among the plurality of time routes, a time route to be output to the mobile body with low priority.

7. The mobile body system according to claim 5 or 6, wherein
the mobile body holds and transports a load, and
the priority determiner gives higher priority to a time route that is based on a moving instruction that sets, as a target position, a transfer station at which a load is transferred to and from the mobile body less frequently.

8. The mobile body system according to claim 5 or 6, wherein
the mobile body holds and transports a load, and
the priority determiner gives higher priority, over other time route, to a time route that is based on a moving instruction that includes, as a starting position, a transfer station at which a load is transferred to and from the mobile body and the mobile body arrives more frequently.

9. The mobile body system according to any one of claims 1 to 8, wherein
each of the node information items includes orientation information indicating an orientation of the mobile body at each of the points.

10. The mobile body system according to claim 9, wherein
the route determiner determines, based on the search space updated, a time route in which a total number of brief stops for changing a moving direction is smallest.

11. The mobile body system according to any one of claims 1 to 10, wherein
the search space creator obtains an element value in a two-dimensional array as the link information, the two-dimensional array being indexed by: (i) information with which each of the node information items included in the node information set is identifiable, the information being defined as source indices corresponding to transition sources, and (ii) information with which each of the node information items included in the node information set is identifiable, the information being defined as destination indices corresponding to transition destinations.

12. The mobile body system according to claim 11, wherein
the source indices and the destination indices are each sequential numbers with rules.

13. A picking system comprising:
the mobile body system according to claim 5 or 6; and
a plurality of picking stations adjacent to the predetermined moving area, at each of which a predetermined number of articles are taken out from a load transported by the mobile body and are put into another container, and the load from which the articles are taken out is transferred to the mobile body, wherein
the priority determiner gives higher priority to a time route that is based on a moving instruction that sets, as a target position, a picking station at which picking is performed less frequently, the picking station being included in the plurality of the picking stations.

14. A picking system comprising:
the mobile body system according to claim 5 or 6; and
a plurality of picking stations adjacent to the predetermined moving area, at each of which a predetermined number of articles are taken out from a load transported by the mobile body and are put into another container, and the load from which the articles are taken out is transferred to the mobile body, wherein
the priority determiner gives higher priority to a time route that is based on a moving instruction that sets, as a starting position, a picking station at which the mobile body arrives more frequently, the picking station being included in the plurality of the picking stations.

15. A route determination method for a mobile body system including: a mobile body that moves in a predetermined moving area; and a time route calculation system that calculates a time route including (i) points on a route from a starting position to a target position of the mobile body in the predetermined moving area, and (ii) times when the mobile body is present at the points, the route determination method comprising:
obtaining, by a node information set obtainer, a node information set of a plurality of node information items each of which includes point information and time information, the point information indicating, in an identifiable manner, a plurality of points arranged in a virtual area including the predetermined moving area for a corresponding one of times at predetermined intervals, time information indicating the corresponding one of the times;
obtaining, by a search space creator, link information linking two of the plurality of node information items included in the node information set, to create a search space;
changing, by a search space updater, the link information to an impossible value to update the search space, the link information determining, based on a time route of a given mobile body, that the given mobile body will come in contact with the mobile body, the impossible value indicating that moving is impossible; and
determining, by a route determiner, a time route of a next mobile body based on the search space updated.
